Europäisches Patentamt

European Patent Office

Office européen des brevets

(19)

(11) Veröffentlichungsnummer: **0 340 242 B1**

(12)

# EUROPÄISCHE PATENTSCHRIFT

(45) Veröffentlichungstag der Patentschrift:
13.03.91 Patentblatt 91/11

(51) Int. Cl.⁵: **B01D 45/08, F24C 15/20**

(21) Anmeldenummer: 88901148.2

(22) Anmeldetag: 29.12.87

(86) Internationale Anmeldenummer:
PCT/EP87/00826

(87) Internationale Veröffentlichungsnummer:
WO 88/04952 14.07.88 Gazette 88/15

(54) ABSCHEIDER FÜR GASFÖRMIGE FLUIDE.

(30) Priorität: 01.01.87 DE 8700012 U

(43) Veröffentlichungstag der Anmeldung:
08.11.89 Patentblatt 89/45

(45) Bekanntmachung des Hinweises auf die
Patenterteilung:
13.03.91 Patentblatt 91/11

(84) Benannte Vertragsstaaten:
AT BE CH DE FR GB IT LI LU NL SE

(56) Entgegenhaltungen:
EP-A- 0 199 924
EP-A- 0 206 204

(73) Patentinhaber: Gutermuth, Paul, sen.
Augustastrasse 48
W-6456 Langenselbold (DE)

(72) Erfinder: Gutermuth, Paul, sen.
Augustastrasse 48
W-6456 Langenselbold (DE)

(74) Vertreter: Stoffregen, Hans-Herbert, Dr.
Dipl.-Phys. et al
Patentanwälte Strasse & Stoffregen
Salzstrasse 11a Postfach 2144
W-6450 Hanau/Main 1 (DE)

## Beschreibung

Die Erfindung bezieht sich auf einen Abscheider gemäß Oberbegriff des Anspruchs 1.

Ein entsprechender Abscheider ist der EP-A-O 206 204 zu entnehmen. Ein entsprechender Abscheider bietet im Vergleich zu anderen einen erhöhten Abscheidegrad, wobei außerdem der Vorteil gegeben ist, daß die Profilteile problemlos gereinigt werden können, da diese grundsätzlich einzeln austauschbar sind. Kennzeichen entsprechender Abscheider ist das Vorhandensein des als Innerenvorsprung zu bezeichnenden von dem Scheitelbereich der Innenfläche der abragenden vorzugsweise im Schnitt tropfen-oder knaufartig ausgebildeten Vorsprungs, wodurch sich im Bereich eines jeden Profilteils Kammern ausbilden, die eine Beeinflussung der Strömungsgeschwindigkeit der durch den Abscheider strömenden Fluide hervorrufen. Hierdurch wird der Abscheidegrad in nicht zu erwartender Weise erhöht.

Aufgabe der vorliegenden Erfindung ist es, einen Abscheider der eingangs genannten Art so auszubilden, daß der Abscheidegrad bei vorgegebenen Profilteilquerschnitten kontrolliert einstellbar ist und insbesondere in dem Bereich, in dem im verstärkten Maß zu reinigende Fluide anfallen, eine erhöhte Abscheidung erfolgt, wohingegen im übrigen Bereich normale Abscheidebedingungen gewählt sein können.

Die Aufgabe wird durch das Kennzeichen des Anspruchs 1 gelöst.

Erfindungsgemäß wird demzufolge ein Abscheider zur Verfügung gestellt, bei dem der Abstand zwischen den ineinandergreifenden Reihen von ersten und zweiten Profilteilen einstellbar ist. Hierdurch besteht die Möglichkeit, daß die sich zwischen den ineinandergreifenden Profilteilen und den Innenvorsprüngen ausbildenden Kammern derart veränderbar sind, daß im gewünschten Umfang die Strömungsgeschwindigkeit der abzusaugenden Fluide eingestellt werden kann, wodurch der Abscheidegrad beeinflußt wird.

Ausgestaltungen ergeben sich aus den Ansprüchen 2 und 3.

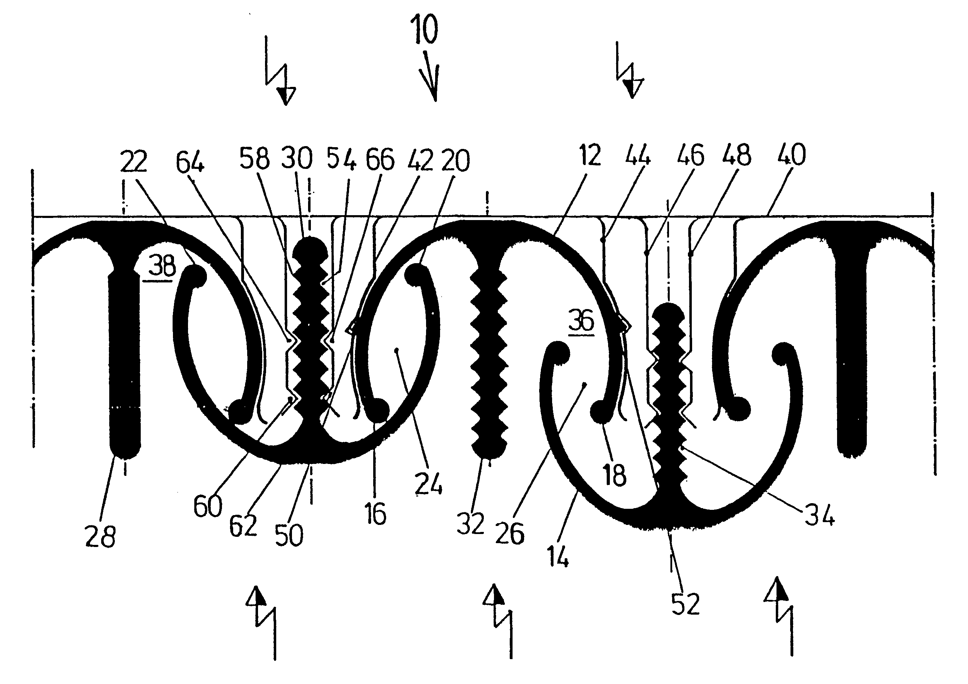

Weitere Einzelheiten, Vorteile und Merkmale ergeben sich nicht nur aus den Ansprüchen, den diesen zu entnehmenden Merkmalen -für sich und/oder in Kombination-, sondern auch aus der nachfolgenden Beschreibung eines in der Zeichnung dargestellten bevorzugten Ausführungsbeispiels.

In der einzigen Figur ist ein Ausschnitt eines erfindungsgemäßen Abscheiders (10) dargestellt, der rinnenförmige offene Profilteile (12), (14) umfaßt, deren Ränder (16), (18) und (20), (22) sich derart hintergreifen, daß sich zwischen den Verengungen der Ränder Kammern ausbilden, von denen im Ausführungsbeispiel zwei beispielhaft mit den Bezugszeichen (24) und (26) bezeichnet sind. Ferner weisen die Profilteile (12) und (14) von der Innenfläche ausgehende in Richtung der Längsachse verlaufende Vorsprünge (28), (30), (32) bzw. (34), wodurch weitere Kammern zu der angrenzenden Innenfläche bzw. zu dem Rand des angrenzenden Profilteils gebildet werden. Beispielhaft sind Kammern mit den Bezugszeichen (36) bzw. (38) versehen. Die in Reihen angeordneten ineinandergreifenden Profilteile (12) und (14) dienen zum Reinigen von gasförmigen Fluiden wie z.B. Kühlfluiden, Ölnebeln, Schmutzpartikel aufweisende Luft und bilden so aneinandergereiht den Abscheider (10).

Dadurch, daß durch die hintergreifenden Ränder (16), (18), (20), (22) und zusätzlich durch die Vorsprünge (28), (30), (32), (34) Kammern (24), (26), (36), (38) gebildet werden, die von den Fluiden durchströmt werden, erfolgt eine Beeinflussung der Strömungsgeschwindigkeit derart, daß eine erhöhte Abscheidung erfolgt.

Die Vorsprünge (28), (30), (32), (34) dienen jedoch nicht nur zur Ausbildung weiterer auf die Fluide einwirkender Kammern (36), (38), sondern verleihen jedem Profilteil (14), (16) eine hohe Eigensteifigkeit. Dadurch können die Profilteile (14), (16) großer Länge ohne zusätzliche Unterstützungen von Halteelementen aufgenommen werden, die nachstehend näher beschrieben werden.

Die die Profilteile (14), (16) erfassenden Halteelemente gehen von einem plattenförmigen Basiselement (40) aus, von dem streifen-förmige Abschnitte ausgehen, und zwar zum Halten der Profilteile (12) streifenförmige Abschnitte (42) und (44) und zum Halten der Profilteile (14) streifenförmige Abschnitte (46) und (48). Die streifenförmige Abschnitte (42) und (44) umfassen die Außenfläche des Profilteils (12) zumindest abschnittweise, wobei eine federnde Ausbildung gewählt ist, um eine sichere Befestigung zu gewährleisten, ohne daß jedoch ein Austausch der Profilteile nicht mehr möglich ist, und gleichzeitig bei Betrieb des Abscheiders (10) zu Lärmgeräuschen führende Vibrationen ausgeschlossen sind. Dabei können die Abschnitte (42), (44) mit von der Außenfläche des Profilteils (12) vorspringenden Rasthaken (50), (52) wechselwirken, um hierdurch die Befestigung zu erhöhen.

Um erfindungsgemäß die Profilteile (14) in bezug auf die Profilteile (12) im Abstand veränderbar einzustellen, sind die Vorsprünge (30) und (34) profiliert, um mit den Abschnitten (46) und (48) in verschiedenen Positionen zusammenzuwirken. Vorzugsweise weisen die Vorsprünge (30) und (34) in Längsrichtung verlaufende Aussparungen (54) bzw. Vorsprünge (58) auf, zeigen also in den Längsseiten im Querschnitt eine Zick-Zack-Struktur.

Die ebenfalls federnd ausgebildeten Abschnitte (46) und (48) sind mit Vorsprüngen (60), (62) und (64), (66) versehen, die in die Aussparungen (54) einrasten. Die Vorsprünge (60), (62) und (64), (66), die als Rasthaken bezeichnet werden, greifen an gegenüberliegenden Seiten des jeweiligen Vorsprungs (30) bzw. (34) erwähntermaßen in die Aussparung (54), die in Längsrichtung der Vorsprünge (30) und (34) verlaufen.

Das Ausführungsbeispiel zeigt, daß zur sicheren Befestigung jeder Abschnitt (46), (48) zwei Rastvorsprünge (60), (64) bzw. (62), (66) aufweist, um so an zwei zueinander beabstandeten Stellen mit dem Vorsprung (30) bzw. (34) wechselzuwirken.

Dadurch, daß die Profilteile (44) in ihrer Höhe in bezug auf die Profilteile verstellbar anordbar sind, kann schwerpunktmäßig eine erhöhte Abscheidung erfolgen, indem das Volumen der zwischen den Profilteilen bzw. den Innenvorsprüngen und den angrenzenden Profilteilen sich ausbildenden Kammern verändert wird. So ist im Ausführungsbeispiel im Bereich des Vorsprungs (30) eine erhöhte Abscheidung im Vergleich zu dem dem Vorsprung (34) angrenzenden Bereich zu erwarten.

Eine entsprechende Ausbildung des Abscheiders (10) weist insbesondere in Industriebetrieben erhebliche Vorteile auf, da man in den Bereichen, in denen erhöhte Mengen an zu reinigenden Fluiden anfallen, gezielt die Abscheiderate erhöht werden kann, wohingegen in anderen Bereichen eine normale Abscheidung genügt. Hierdurch bedingt kann der Luftdurchsatz durch ein mit einem erfindungsgemäßen Abscheider, der sich über die gesamte Decke einer Produktionshalle erstrecken kann, auch dann auf Normalbedingungen eingestellt werden, wenn punktuell eine erhöhte Absaugung erforderlich ist, die erfindungsgemäß durch den Abstand der ineinandergreifenden Reihen von Profilteilen (12), (14) ermöglicht wird.

## Ansprüche

1. Abscheider (10) für gasförmige Fluide wie Kühlfluide, Ölnebel, Fettnebel, Schmutzpartikel aufweisende Luft mit in zumindest zwei gegenüberliegenden Reihen angeordneten im Querschnitt offenen, rinnenförmigen ersten und zweiten Profilteilen (12, 14), wobei die freien Längskanten der Ränder (16, 18) der ersten Profilteile die freien Längskanten (20, 22) der Ränder der zweiten Profilteile überlappen und die Profilteile zur Bildung von Kammern jeweils einen vorzugsweise im Scheitelbereich der Innenfläche ausgehenden, sich in Richtung der Profilteilöffnung erstreckenden Vorsprung (28, 30, 32, 34) aufweisen, der zumindest abschnittweise entlang der Längsachse des Profilteils verläuft, und wobei erste Halteeinrichtungen (42, 44) zumindest abschnittweise die Außenfläche der ersten Profilteile (12) umfassen, deren Öffnungen den Fluiden unmittelbar zugewandt sind, und zweite Halteeinrichtungen (46, 48) streifenförmige Elemente aufweisen, die entlang der Vorsprünge (30, 34) der zweiten Profilteile (14) verlaufen, **dadurch gekennzeichnet,** daß zum Festrasten der zweiten Halteeinrichtungen (46, 48) in verschiedenen Höhen der Vorsprünge (30, 34) der zweiten Profilelemente (14) die Vorsprünge profiliert sind, wobei jedes streifenförmige Element der zweiten Halteeinrichtungen zumindest zwei zueinander beabstandete, in Vertiefungen des Vorsprungs (30, 34) eingreifende Ausbuchtungen (60, 62, 64) aufweist.

2. Abscheider nach Anspruch 1, **dadurch gekennzeichnet,** daß die Ausbuchtungen (60, 62, 64) Rasthaken sind.

3. Abscheider nach Anspruch 1, **dadurch gekennzeichnet,** daß die Vorsprünge (30, 34) der zweiten Profilelemente (14) im Schnitt zick-zackförmig ausgebildete Seitenflächen aufweisen.

## Claims

1. Collector (10) for gaseous fluids such as cooling fluids, oil vapour, grease vapour, air containing dirt particles, having channel-shaped first and second profile parts (12, 14), which are open in cross-section and are arranged in at least two opposite rows, wherein the free longitudinal edges of the sides (16, 18) of the first profile parts overlap the free longitudinal edges (20, 22) of the sides of the second profile parts, and the profile parts each have, in order to form chambers, a projection (28, 30, 32, 34), which extends in the direction of the profile part aperture, preferably in the apex region of the inner face, and which extends at least in sections along the longitudinal axis of the profile part, and wherein first holding devices (42, 44) enclose, at least in sections, the outer face of the first profile parts (12), whose apertures directly face the fluids, and second holding devices (46, 48) have strip-like elements extending along the projections (30, 34) of the second profile parts (14), characterised in that, in order to lock the second holding devices (46, 48) firmly at different heights of the projections (30, 34) of the second profile elements (14), the projections are profiled, in which case each strip-like element of the second holding devices has at least two spaced convexities (60, 62, 64) engaging in recesses in the projection (30, 34).

2. Collector according to claim 1, characterised in that the convexities (60, 62, 64) are locking hooks.

3. Collector according to claim 1, characterised in that the projections (30, 34) of the second profile elements (14) have side faces with a zig-zag-shaped cross-section.

## Revendications

1. Séparateur (10) pour des fluides gazeux tels que des fluides de refroidissement, un brouillard d'huile, un brouillard de graisse ou de l'air chargé de particules de poussières, avec au moins deux rangées opposées de premières et secondes pièces profilées (12, 14) de section ouverte, en forme de goulotte, les arêtes longitudinales libres (16, 18) des bords des premières pièces profilées recouvrant les arêtes longitudinales (20, 22) des bords des secondes pièces profilées, et les pièces profilées se terminant chaque fois de préférence dans la zone du sommet de la surface intérieure, pour former des chambres ayant une partie en saillie (28, 30, 32, 34) dirigée vers l'ouverture des pièces profilées, cette partie en saillie étant dirigée au moins par segments suivant l'axe longitudinal de la pièce profilée et des premiers organes de fixation (42, 44) entourant au moins partiellement la surface extérieure des premières pièces profilées (12) dont les ouvertures sont directement tournées vers les fluides ainsi que des seconds organes de fixation (46, 48) ayant des éléments en forme de dents qui s'étendent le long des parties en saillie (30, 34) des secondes pièces profilées (14), séparateur caractérisé en ce que les parties en saillie sont profilées pour accrocher les seconds organes de fixation (46, 48) à différentes hauteurs des parties en saillie (30, 34) des éléments profilés (14), et chaque élément en forme de bande des seconds organes de fixation a au moins deux déformations (60, 62, 64) distantes l'une de l'autre et venant s'accrocher dans les déformations de la partie en saillie (30, 34).

2. Séparateur selon la revendication 1, caractérisé en ce que les déformations (60, 62, 64) sont des crochets d'encliquetage.

3. Séparateur selon la revendication 1, caractérisé en ce que les parties en saillie (30, 34) des seconds éléments profilés (14) ont des surfaces latérales qui, en coupe, ont une forme en zigzag.